# EUROPÄISCHE PATENTSCHRIFT

(11) **EP 1 915 561 B1**
(45) Veröffentlichungstag und Bekanntmachung des Hinweises auf die Patenterteilung: **02.12.2009**
(21) Anmeldenummer: 06762448.6
(22) Anmeldetag: 06.07.2006
(51) Int. Cl.: F16L 21/03

(54) **KUPPLUNG FÜR EINE FLUIDLEITUNGSANORDNUNG**
COUPLING FOR A FLUID LINE ARRANGEMENT
RACCORD POUR SYSTEME DE CONDUITE DE FLUIDE

(30) Priorität: 12.08.2005 DE 102005038397
(43) Veröffentlichungstag der Anmeldung: 30.04.2008
(73) Patentinhaber: A. RAYMOND ET CIE, 38000 Grenoble (FR)
(72) Erfinder: FEGER, Axel, 79540 Lörrach (DE); UTZ, Daniel, 79415 Bad Bellingen (DE)
(74) Vertreter: Rüttgers, Joachim
(86) Internationale Anmeldenummer: PCT/EP2006/006592
(87) Internationale Veröffentlichungsnummer: WO 2007/019916

(56) Entgegenhaltungen:
- DE-U1- 20 016 118
- DE-U1- 29 903 469
- US-A- 3 081 102
- US-A- 3 368 830
- US-A- 3 584 889
- US-A- 3 891 224
- US-A- 4 147 368

## Beschreibung

Die Erfindung betrifft eine Kupplung für eine Fluidleitungsanordnung gemäß dem Oberbegriff des Patentanspruches 1.

Eine derartige Kupplung für eine Fluidleitungsanordnung ist aus US-A-4,147,368 bekannt. Die vorbekannte Kupplung weist ein Kupplungsteil auf, das über eine Dichtungseinheit in Gestalt eines Dichtungsringes verfügt, mit der das Kupplungsteil und ein in das Kupplungsteil einfügbares Einsteckteil gegeneinander abdichtbar sind. Der Dichtungsring ist in einer umlaufenden, in der Innenwand des Kupplungsteiles eingebrachten vertieften Aufnahmenut angeordnet und verfügt, über eine radial außen liegende plane Außenseite, die an einer planen Auflagefläche der Aufnahmenut anliegt, und ist mit einer radial nach innen ausgerichteten gewölbten Innenseite ausgebildet, wobei zwischen der Außenseite und der Innenseite rechtwinklig zu der Außenseite ausgerichtete Randseiten ausgebildet sind.

Aus US-A-3,584,889 und US-A-3,368,830 sind jeweils eine Kupplung für eine Fluidleitungsanordnung bekannt, bei der ein Kupplungsteil in Gestalt einer sich zwischen zwei Leitungsenden der Fluidleltungsanordnung erstreckenden Hülse endseitig mit durch radiales Aufweiten der Hülse ausgeformten rechteckförmigen Dichtungsringaufnahmen ausgebildet ist. Bei der US-A-3,584,889 sind in die Dichtungsringaufnahmen jeweils eine Dichtungsring mit einer radial außen liegenden planen Außenseite und einer nach innen ausgerichteten gewölbten Innenseite eingefügt ist, wobei zwischen der Außenseite und der Innenseite rechtwinklig zu der Außenseite ausgerichtete Randseiten mit axial vorstehenden Erhebungen ausgebildet sind. Bei der US-A-3,368,830 sind in die Dichtungsringaufnahmen jeweils eine Dichtungsring mit einer radial außen liegenden planen Außenseite und mit einer innen ausgerichteten Innenseite eingefügt, wobei die Innenseite eine Anzahl von flexiblen Rippen aufweist, die verformbar sind und sich an die Leitungsenden der Fluidleitungsanordnung anpassen.

Aus DE 200 16 118 U1 ist eine Fluidleitungsanordnung mit einer mit verschiedenen Rundungen, Nuten und Flachseiten komplex ausgebildeten Dichtung bekannt

Aus DE 299 03 469 U1 ist eine Fluidleitungsanordnung mit Haken ausgebildeten ringförmigen Dichtungen bekannt.

Aus US-A-3,891,224 ist eine D-förmige Dichtung für ein aus Ringsegmenten zusammengesetztes Mannloch bekannt, die eine radial außen liegende plane Außenseite und eine radial nach innen ausgerichtete gewölbte Innenseite aufweist, wobei sich zwischen der Außenseite und der Innenseite rechtwinklig zu der Außenseite ausgerichtete Randseiten erstrecken. Die Dichtung ist mit einem innenhohlraum ausgebildet und liegt mit einer Randseite an einer in einem Ringsegment ausgebildeten Anschlagstufe an.

Aus US-A-3,081,102 ist eine Fluidleitungsanordnung mit einer domartige und fingerartige Erhebungen aufweisenden Dichtung bekannt.

Aus DE 101 15 399 C1 ist eine in eine Fluidleitungsanordnung zu integrierende Kupplung bekannt, die ein Kupplungsteil aufweist, das über eine Dichtungseinheit mit wenigstens einem Dichtungsring verfügt. Die Dichtungseinheit bei der vorbekannten Kupplung weist zwei Dichtungsringe mit jeweils rundem Querschnitt sowie einen zwischen den Dichtungsringen angeordneten Zwischenring auf und ist dazu vorgesehen, das Kupplungsteil und ein in das Kupplungsteil einfügbares Einsteckteil gegeneinander abzudichten.

Der Erfindung liegt die Aufgabe zugrunde, eine Kupplung für eine Fluidleitungsanordnung der eingangs genannten Art anzugeben, die im Querschnitt verhältnismäßig klein ausgebildet ist und bei der der oder jeder Dichtungsring zuverlässig gegen Verwinden sowie Herausfallen gesichert ist.

Diese Aufgabe wird bei einer Kupplung für eine Fluidleitungsanordnung der eingangs genannten Art erfingdungsgemäß mit den kennzeichnenden Merkmalen des Patentanspruches 1 gelöst

Dadurch, dass die Dichtungseinheit über einen über die plane Auflagefläche vorstehenden Rückhaltebund mit schrägen Wänden, über eine Stufe mit einer Anlagefläche und über einen in Einführrichtung des Einsteckteiles rückseitig des Haltebundes angeordneten Dichtungsring mit einer anschaulich gesprochen D-förmigen Gestalt verfügt, bei dem die Außenseite und die innenseite direkt ineinander übergehen, ist bei einer schlanken Bauweise der Kupplung der oder jeder Dichtungsring gegen Herausfallen gesichert und die Verwindungssteifigkeit des betreffenden Dichtungsringes gegenüber einem rundlichen Querschnitt deutlich erhöht, so dass die Gefahr einer abschnittsweisen verdrehung in sich selbst deutlich verringert ist.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer teilgeschnittenen Seitenansicht ein Ausführungs- beispiel einer erfindungsgemäßen Kupplung mit einer Dich- tungseinheit, die einen einzigen D-förmigen Dichtungsring aufweist, und
- Fig. 2: in einer Schnittansicht das Ausführungsbeispiel gemäß Fig. 1 im Bereich des Dichtungsringes mit einem in das Kupp- lungsteil eingefügten Einsteckteil.

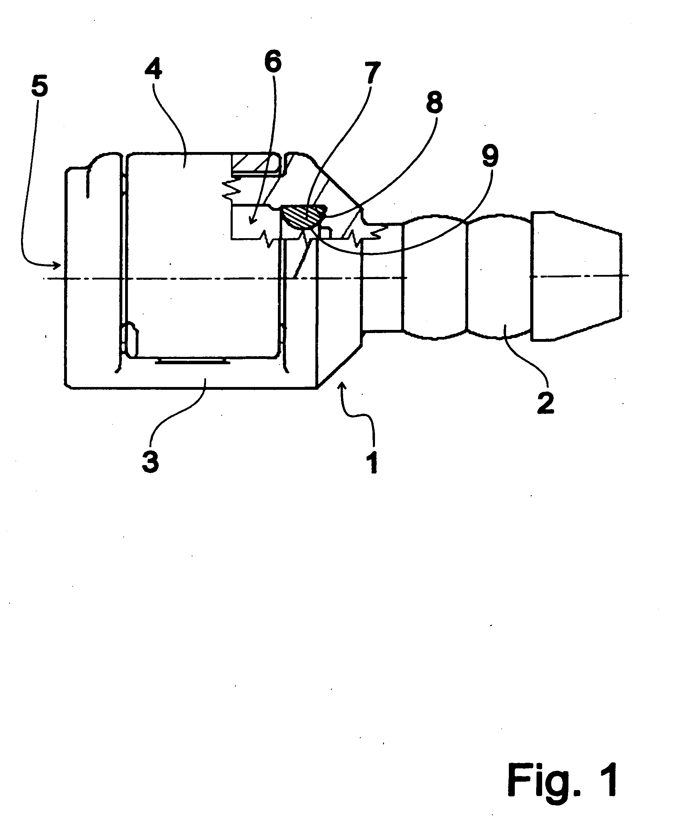

Fig. 1 zeigt in einer teilgeschnittenen Seitenansicht ein Ausführungsbeispiel einer erfindungsgemäßen Kupplung. Die dargestellte erfindungsgemäße Kupplung verfügt über ein Kupplungsteil 1, das mit einem Anschlussstutzen 2 zum Verbinden mit beispielsweise einem Schlauch einer in Fig. 1 nicht dargestellten Fluidleitungsanordnung eingerichtet ist. Weiterhin ist das Kupplungsteil 1 mit einem Aufnahmeabschnitt 3 eingerichtet, der im Umfang gegenüber dem Anschlussstutzen 2 vergrößert ist und bei diesem Ausführungsbeispiel eine Aufnahme für eine Sicherungsklammer 4 aufweist, mit der ein in Fig. 1 nicht dargestelltes Einsteckteil nach Einfügen in den Aufnahmeabschnitt 3 von einer dem Anschlussstutzen 2 gegenüberliegenden Einführseite 5 des Kupplungsteiles 1 in einer von der Einführseite 5 in Richtung des Anschlussstutzens 2 weisenden Einführrichtung gegen unbeabsichtigtes Herausrutschen aus dem Aufnahmeabschnitt 3 verriegelbar ist. Dadurch ist das Einsteckteil betriebssicher in einem im Wesentlichen zylinderförmigen, von dem Aufnahmeabschnitt 3 umschlossenen Aufnahmeraum 6 angeordnet.

Weiterhin verfügt die erfindungsgemäße Kupplung über eine Dichtungseinheit, die bei dem dargestellten Ausführungsbeispiel durch einen ringförmig geschlossenen Dichtungsring 7 gebildet ist. Der Dichtungsring 7 ist bei dem dargestellten Ausführungsbeispiel mit einer planen Außenseite 8 ausgebildet, die in bestimmungsgemäßer Anordnung radial nach außen weist, und verfügt über eine gewölbte Innenseite 9, die sich zwischen den Randseiten der Flachseite 8 erstreckt und radial nach innen ausgerichtet ist. Bei dem dargestellten Ausführungsbeispiel weist der Dichtungsring 7 einen im Wesentlichen halbkreisförmigen Querschnitt und in gestreckter Anordnung eine halbzylinderförmige Gestalt auf, wobei die plane Außenseite 8 in einer Ergänzung des Querschnitts zu einem Vollkreis beziehungsweise einem Vollzylinder in der Symmetrieebene liegt.

Bei anderen zweckmäßigen, hier nicht dargestellten Ausgestaltungen bildet die gewölbte Innenseite 9 des Dichtungsringes 7 über einem Teilumfang eines Kreises, der einen Winkelbereich von weniger oder mehr als 180 Grad überstreicht, so dass die plane Außenseite 8 außerhalb der Mitte des entsprechenden Vollkreises liegt.

Bei anderen zweckmäßigen Ausgestaltungen weist die gewölbte Innenseite 9 eine elliptische Außenfläche auf, wobei die plane Außenseite 8 entweder für eine symmetrische Ausgestaltung des Dichtungsringes 7 in einer der beiden Symmetrieebenen der Ellipse oder gegenüber einer von diesen parallel versetzt liegt, falls eine asymmetrische Ausgestaltung zweckmäßig ist.

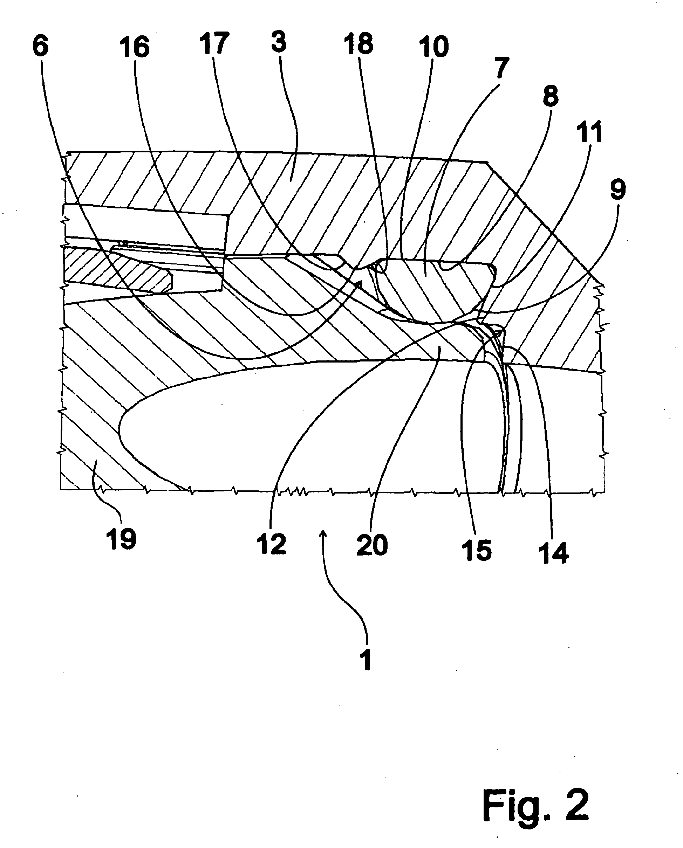

Fig. 2 zeigt in einer Schnittansicht das Ausführungsbeispiel gemäß Fig. 1 im Bereich des Dichtungsringes 7. Wie aus Fig. 2 deutlich erkennbar ist, liegt die radial außenliegende plane Außenseite 8 des Dichtungsringes 7 an einer ebenfalls plan ausgebildeten Auflagefläche 10 des Kupplungsteiles 1 an, so dass bei bereits sehr geringen, radial nach außen wirkenden Kräften aufgrund der großen Kontaktfläche zwischen der Außenseite 8 und der Auflagefläche 10 eine sehr gute Dichtwirkung erzielt ist. Benachbart der Auflagefläche 10 ist eine rückseitige Anlagefläche 11 einer entgegen der Einführrichtung axial vorstehenden Stufe 12 ausgebildet, während zwischen einer radial nach innen weisenden Abschlusswand 13 und einer sich im Wesentlichen in radialer Richtung erstreckenden Anschlagswand 14 des Kupplungsteiles 1 ein Spielausgleichsraum 15 vorhanden ist.

Weiterhin lässt sich der Darstellung gemäß Fig. 2 deutlich entnehmen, dass an dem in Einführrichtung vorne liegenden Randbereich der planen Auflagefläche 11 ein radial nach innen vorstehender Rückhaltebund 16 mit in Einführrichtung vorne liegenden Vorderwand 17 und einer in Einführrichtung rückseitig gelegenen Rückwand 18 ausgebildet ist. Der Rückhaltebund 16 sichert den Dichtungsring 7 gegen ein unbeabsichtigtes Herausrutschen aus dem Kupplungsteil 1, wobei für eine beschädigungsfreie Entformung die Rückwand 18 zweckmäßigerweise eine geringere Neigung als die Vorderwand 17 aufweist.

Weiterhin ist in Fig. 2 ein Einsteckteil 19 dargestellt, das entsprechend den Kopplungsteil 1 beispielsweise mit einem Schlauch einer auch in Fig. 2 nicht dargestellten Fluidleitungsanordnung verbindbar ist, um eine Fluidverbindung zu dem mit dem Kupplungsteil 1 verbundenen Schlauch zu schaffen. Das Einsteckteil 19 ist in Fig. 2 in bestimmungsgemäßer Anordnung zum Schaffen der Fluidverbindung dargestellt, in der ein in Einführrichtung vorne liegender Endabschnitt 20 des Einsteckteiles 19 mit seiner radialen Außenseite mit den im Wesentlichen radial nach innen ausgerichteten Abschnitten der gewölbten Außenseite 9 in Kontakt kommt und den Dichtungsring 7 geringfügig verformt, wobei ein in Einführrichtung rückseitig gelegener Wandbereich der gewölbten Innenseite 9 an der Anlagefläche 11 anliegt, um im Bereich des Endabschnittes 20 eine Dichtwirkung zu erzielen. Dadurch ist insgesamt eine verhältnismäßig große Verträglichkeit der erfindungsgemäßen Kupplung gegenüber Fertigungstoleranzen in radialer Richtung gegeben.

Weiterhin lässt sich Fig. 2 entnehmen, dass in bestimmungsgemäßer Anordnung des Einsteckteiles 19 zwischen der in Einführrichtung vorne liegenden Stirnseite des Endabschnittes 12 des Einsteckteiles 19 und der Anschlagswand 14 des Kupplungsteiles 1 mit dem Spielausgleichsraum 15 ein ebenfalls großer Toleranzbereich in axialer Richtung bereitgestellt ist.

## Patentansprüche

1. Kupplung für eine Fluidleitungsanordnung mit einem Kupplungsteil (1), das über eine Dichtungseinheit mit wenigstens einem Dichtungsring (7) verfügt, mit der das Kupplungsteil (1) und ein in das Kupplungsteil (1) einfügbares Einsteckteil (19) gegeneinander abdichtbar sind, wobei der Dichtungsring (7) über eine radial außen liegende plane Außenseite (8) verfügt, die an einer planen Auflagefläche (10) des Kupplungsteiles (1) anliegt, und mit einer radial nach innen ausgerichteten gewölbten Innenseite (9) ausgebildet ist, wobei sich die Innenseite (9) zwischen den Randseiten der planen Außenseite (8) des Dichtungsringes (7) erstreckt, wobei an dem in Einführrichtung eines Einsteckteiles (19) vorderen Bereich der planen Auflagefläche (10) ein über die plane Auflagefläche (10) radial nach innen vorstehender Rückhaltebund (16) mit einer in Einführrichtung vorne liegenden, schräg ansteigend geneigten Vorderwand (17) ausgebildet ist und wobei der Dichtungsring (7) zwischen dem Rückhaltebund (16) sowie einer rückseitigen Anlagefläche (11) einer entgegen der Einführrichtung axial vorstehenden Stufe (12) angeordnet ist, **dadurch gekennzeichnet, dass** der Dichtungsring (7) eine D-förmige Gestalt aufweist und dass der Rückhaltebund (16) mit einer in Einführrichtung rückseitig gelegenen, schräg abfallend geneigten Rückwand (18) ausgebildet ist.

2. Kupplung nach Anspruch 1, **dadurch gekennzeichnet, dass** der Rückhaltebund (16) an der in Einführrichtung vorderen Seite eine Vorderwand (17) aufweist, die steiler angestellt ist als eine in Einführrichtung rückseitig liegende Rückwand (18).

3. Kupplung nach Anspruch 1 oder Anspruch 2, **dadurch gekennzeichnet, dass** der oder jeder eine plane Außenseite (8) aufweisende Dichtungsring (7) eine plane Außenseite (8) aufweist, die einer Symmetrieebene einer entsprechend der geometrischen Grundform vervollständigten umlaufenden gewölbten innenseite (9) entspricht.

4. Kupplung nach Anspruch 3, **dadurch gekennzeichnet, dass** der Dichtungsring (7) einen halbkreisförmigen Querschnitt aufweist.

## Claims

1. Coupling for a fluid line arrangement, comprising a coupling part (1) which has a sealing unit with at least one sealing ring (7) with which the coupling part (1) and an insertion part (19) insertable into the coupling part (1) can be sealed against one another, the sealing ring (7) having a radially outer planar outside (8), which rests against a planar contact surface (10) of the coupling part (1), and being formed with an arched inside (9) directed radially inwards, the inside (9) extending between the edges of the planar outside (8) of the sealing ring (7), a retaining collar (16) projecting radially inwards over the planar contact surface (10) being formed, in that region of the planar contact surface (10) which is at the front in the insertion direction of an insertion part (19), with a front wall (17) which is at the front in the insertion direction and is inclined so that it ascends obliquely, and the sealing ring (7) being arranged between the retaining collar (16) and a rear contact surface (11) of a step (12) projecting axially in a direction opposite to the insertion direction, **characterized in that** the sealing ring (7) has a D-shaped form and **in that** the retaining collar (16) is formed with a back wall (18) which is located at the back in the insertion direction and is inclined so that it falls off obliquely.

2. Coupling according to Claim 1, **characterized in that** the retaining collar (16) has, on the side which is at the front in the insertion direction, a front wall (17) which is steeper than a back wall (18) located at the back in the insertion direction.

3. Coupling according to Claim 1 or Claim 2, **characterized in that** the or each sealing ring (7) having a planar outside (8) has a planar outside (8) which corresponds to a symmetry plane of an all-round arched inside (9) completed according to the basic geometrical shape.

4. Coupling according to Claim 3, **characterized in that** the sealing ring (7) has a semicircular cross-section.

## Revendications

1. Raccord destiné à un système de conduites de fluide, comprenant un élément d'accouplement (1) qui est muni d'un organe d'étanchéité se composant d'au-moins une bague d'étanchéité (7), au moyen duquel il est possible de réaliser une étanchéité réciproque entre l'élément d'accouplement (1) et un élément embrochable mâle (19) destiné à être emmanché dans l'élément d'accouplement (1), la bague d'étanchéité (7) comportant en l'occurrence un côté extérieur plan (8) se situant à l'extérieur dans le plan radial, qui est en contact d'application avec une face d'appui plane (10) de l'élément d'accouplement (1) et comportant un côté intérieur bombé (9) orienté vers l'intérieur dans le plan radial, le côté intérieur (9) s'étendant en l'occurrence entre les portions de rive du côté extérieur plan (8) de la bague d'étanchéité (7), un épaulement de retenue (16) faisant saillie vers l'intérieur dans le plan radial au-dessus de la face d'appui plane (10), comportant une paroi antérieure (17) inclinée suivant une pente ascendante oblique, étant en l'occurrence prévue au niveau de la portion antérieure, dans le sens de l'emmanchement d'un élément embrochable mâle (19), de la face d'appui plane (10) et la bague d'étanchéité (7) étant en l'occurrence disposée entre l'épaulement de retenue (16) et une face de contact d'application postérieure (11) d'un décrochement (12) faisant saillie dans le plan axial dans le sens contraire de celui de l'emmanchement, **caractérisé en ce que** la bague d'étanchéité (7) présente une configuration en forme de D et **en ce que** l'épaulement de retenue (16) comporte une paroi arrière (18) inclinée suivant une pente descendante, se situant à l'arrière dans le sens de l'emmanchement.

2. Raccord selon la revendication 1, **caractérisé en ce que** l'épaulement de retenue (16) comporte, au niveau de son côté antérieur dans le sens de l'emmanchement, une paroi antérieure (17) dont la déclivité est plus prononcée que celle de la paroi arrière (18) se situant à l'arrière dans le sens de l'emmanchement.

3. Raccord selon la revendication 1 ou la revendication 2, **caractérisé en ce que** la ou chaque bague d'étanchéité (7) comportant un côté extérieur plan (8) comporte un côté extérieur plan (8) qui correspond au plan de symétrie d'un côté intérieur (9) périphérique bombé réalisé en fonction de la configuration géométrique de base.

4. Raccord selon la revendication 3, **caractérisé en ce que** la bague d'étanchéité (7) présente une section transversale de forme semi-circulaire.
